# EUROPEAN PATENT SPECIFICATION

(11) **EP 4 130 560 B1**
(45) Date of publication and mention of the grant of the patent: **22.11.2023**
(21) Application number: 20728091.8
(22) Date of filing: 02.04.2020
(51) Int. Cl.: F21V 5/04, G02B 27/00, F21S 8/04, F21S 8/06

(54) **LUMINAIRE**
LEUCHTE
LAMPE

(43) Date of publication of application: 08.02.2023
(73) Proprietor: Antares Iluminación, S.A.U., 46394 Ribarroja (Valencia) (ES)
(72) Inventor: MARTINEZ WEBER, Federico, 46394 RIBARROJA (Valencia) (ES)
(74) Representative: Temiño Ceniceros, Ignacio
(86) International application number: PCT/ES2020/070219
(87) International publication number: WO 2021/198539

(56) References cited:
- EP-A2- 1 916 470
- CN-B- 104 456 420
- DE-A1-102011 085 275
- US-A- 2 282 167
- US-A- 3 701 896
- US-A1- 2012 300 470
- US-A1- 2015 338 040

## Description

### OBJECT OF THE INVENTION

The present invention relates to an optical device that enables the projection of the light to be controlled such that it comes out parallel to a non-active multi-cell shielding device, wherein said shielding device is not illuminated by the light beam, the user perceiving the light with all its intensity, without loss of intensity due to the reflection of said shielding device.

Furthermore, due to the low profile thereof, the optical device enables same to be integrated into a luminaire with a reduced height dimension, which is also object of the present invention.

### BACKGROUND OF THE INVENTION

Optical devices are known in the prior art which have a shielding device that reflects the light emitted by a light source, such that the intensity of said light that reaches the user is dimmed, in addition to being confined to a specific shielding or cut-off angle due to said reflection made by the shielding device.

These optical devices are normally integrated into high-profile luminaires, which reduces the possibilities of integration in certain environments where the limitations associated with the available space prevent it from being placed.

For this reason, the light source must be placed very far from the light output area of the lighting device, making the necessary optical assembly very complex, resulting in a high cost of said lighting device.

Furthermore, luminaires are known which comprise multiple arrangements of optical bulbs with fixed or adjustable installation. In the first case, a specific area is illuminated by the arrangement of a specific screen near the light bulb. This is the case, for example, with floor lamps or with many other types of lamps attached as wall sconces or suspended from the ceiling. In the case of lamps with adjustable bulbs, devices are known wherein the screen or the light bulb assembly can be adjusted such that the light beam generated by the lamp is sent to the area to be illuminated. These types of lamps comprise different reflector structures that can be oriented and others.

However, they all have the drawback that they comprise complex mechanisms for orienting the light or making the light reach an area with a specific intensity. Known prior art luminaires are disclosed in US 2015/338040 A1 (D1), US 2 282 167 A, EP 1 916 470 A2, US 3 701 896 A and CN 104 456 420 B.

The luminaire of the present invention comprising said optical device solves all the previously described drawbacks.

### DESCRIPTION OF THE INVENTION

The present invention relates to an optical device according to claim 1. Said optical device enables the projection of the light to be controlled such that it comes out parallel to a non-active multi-cell shielding device, wherein said shielding device is not illuminated by the light beam, the user perceiving the light with all its intensity, without loss of intensity due to the reflection of said shielding device.

The optical device comprises
- at least one light source intended to radiate a light beam in an essentially vertical downward direction;
- a lens that in turn comprises:
   ∘ a first refractive surface through which the light beam is refracted; and
   ∘ a second refractive surface through which the light beam refracts;

   wherein the first refractive surface is arranged between the at least one light source and the second refractive surface;
   wherein the first refractive surface and the second refractive surface are essentially parabolic; and
   wherein the first refractive surface and the second refractive surface are arranged such that the vertices of said parabolic surfaces are the furthermost points between each of them and the at least one light source in the essentially vertical downward direction; and
- a shielding device defining therein an interior space;
wherein the second refractive surface is confined in the interior space defined by the shielding device and
the vertex of the first refractive surface is arranged at the same height as an upper end of the second refractive surface in the essentially vertical downward direction.

The optical device thus configured enables the projection of the light to come out parallel to the shielding device, such that said shielding device is non-active, since the light beam does not strike said shielding device and therefore is not reflected, the user perceiving the light with all its intensity, without loss of intensity due to the reflection of said shielding device.

Furthermore, the shielding device, without being active, avoids dazzling the user when said user is not located under the optical device.

Optionally, the lens further comprises a first total internal reflection (TIR) surface that surrounds the at least one light source up to the first refractive surface, such that all of the light rays of the light beam leaving the at least one light source are directed to the first refractive surface, either by direct incidence or by reflection thereof on the first total internal reflection surface.

Optionally, the projection of the first refractive surface in the essentially vertical downward direction is contained in the second refractive surface.

In this way, all of the light rays of the light beam that are refracted by the first refractive surface reach the second refractive surface, without loss of intensity of the at least one light source occurring as it passes through the lens.

Optionally, the shielding device has an essentially truncated pyramid shape.

Preferably, the optical device comprises one light source. Also preferably, the optical device comprises two adjacently arranged light sources.

The invention also relates to a luminaire comprising at least one optical device of those described previously.

Optionally, the luminaire further comprises a housing wherein the at least one optical device and holding means for holding said luminaire are arranged. Preferably, these holding means comprise cables configured to support the luminaire on a ceiling.

Preferably, the luminaire comprises a plurality of adjacently arranged optical devices.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings constituting an integral part of the same, which by way of illustration and not limitation, represent the following:
Figure 1 shows a cross-sectional view of the optical device of the present invention wherein the distribution of the light rays emitted by the at least one light source as it passes through the lens has been represented.
Figure 2 shows an elevation view of the luminaire comprising a set of optical devices.

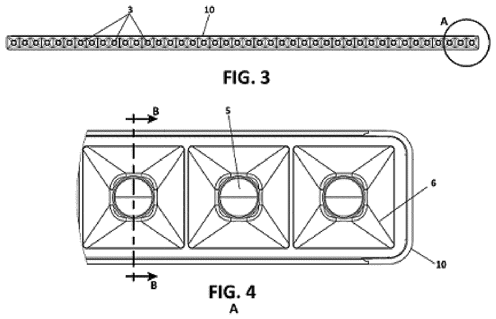

Figure 3 shows a bottom view of Figure 2.
Figure 4 shows a detail A of Figure 2.
Figure 5 shows a cross-sectional view BB of Figure 4.
Figure 6 shows a view of the luminaire of the invention wherein three optical devices and the distribution of the light rays emitted by the at least one light source as it passes through the lens of each optical device have been represented.

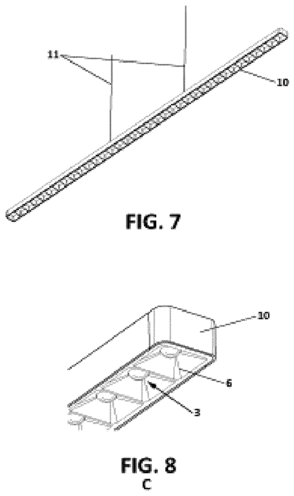

Figure 7 shows a perspective view of Figure 2.
Figure 8 shows a detail C of Figure 7.

### PREFERRED EMBODIMENT OF THE INVENTION

The optical device of the present invention is described below in detail.

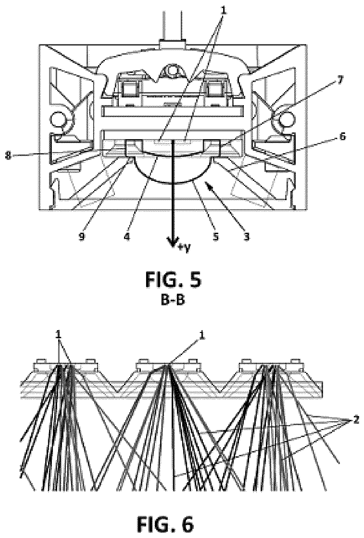

The optical device, as shown in Figure 5, comprises
- at least one light source (1) intended to radiate a light beam (2) in an essentially vertical downward direction (+Y);
- a lens (3) that in turn comprises:
   ∘ a first refractive surface (4) through which the light beam (2) is refracted; and
   ∘ a second refractive surface (5) through which the light beam (2) refracts;

wherein the first refractive surface (4) is arranged between the at least one light source (1) and the second refractive surface (5);
wherein the first refractive surface (4) and the second refractive surface (5) are essentially parabolic; and
wherein the first refractive surface (4) and the second refractive surface (5) are arranged such that the vertices of said parabolic surfaces are the furthermost points between each of them and the at least one light source (1) in the essentially vertical downward direction (+Y); and

- a shielding device (6), preferably having truncated pyramid shape, which defines therein an interior space;
- wherein the second refractive surface (5) is confined in the interior space defined by the shielding device (6); and
the vertex of the first refractive surface (4) is arranged at the same height as an upper end of the second refractive surface (5) in the essentially vertical downward direction (+Y).

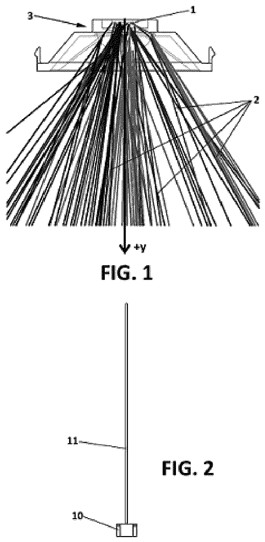

The optical device thus configured enables the projection of the light to come out parallel to the shielding device (6), such that said shielding device (6) is non-active, as seen in Figure 1.

The lens (3) further comprises a first total internal reflection surface (7) that surrounds the at least one light source (1) up to the first refractive surface (4), such that all of the light rays of the light beam (2) leaving the at least one light source (1) are directed to the first refractive surface (4), either by direct incidence or by reflection thereof on the first total internal reflection surface (7). Preferably, the first total internal reflection surface (7) is cylindrical. More preferably, the first total internal reflection surface (7) comprises a diameter that coincides with a diameter of the first refractive surface (4), this diameter of the first refractive surface (4) being the largest diameter of said essentially parabolic first refractive surface (4).

Preferably, the lens (3) further comprises a second total internal reflection surface (8, 9) that surrounds the at least one light source (1) and the first total internal reflection surface (7) up to the second refractive surface (5), such that all of the light rays of the light beam (2) that pass through the first refractive surface (4) are directed to the second refractive surface (5) either by direct incidence or by reflection thereof on the second total internal reflection surface (8, 9).

Preferably, the second total internal reflection surface (8, 9) is cylindrical, with a cylindrical section (8) and a flat section (9) connecting the cylindrical section (8) and the second refractive surface (5). More preferably, the cylindrical section (8) of the second total internal reflection surface (8, 9) comprises a diameter that is larger than a diameter of the second refractive surface (5), this diameter of the second refractive surface (5) being the largest diameter of said essentially parabolic second refractive surface (5).

Preferably, the projection of the first refractive surface (4) in the essentially vertical downward direction (+Y) is contained in the second refractive surface (5).

Preferably, the optical device may comprise one light source (1). Also preferably, the optical device may comprise two adjacently arranged light sources (1).

The invention also relates to a luminaire comprising at least one optical device of those described previously.

Preferably, the luminaire further comprises a housing (10) wherein the at least one optical device and holding means (11) for holding said luminaire are arranged, these holding means (11) being cables configured to support the luminaire on a ceiling (not shown).

In this exemplary embodiment, the luminaire comprises a plurality of adjacently arranged optical devices, preferably 54, held by 4 cables.

Preferably, the luminaire comprises a first set of optical devices comprising a light source (1) and a second set of optical devices comprising two adjacently arranged light sources (1), wherein the first set of optical devices and the second set of optical devices are arranged alternating in the luminaire.

## Claims

1. An optical device comprising:
• at least one light source (1) intended to radiate a light beam (2) in an essentially vertical downward direction (+Y);
• a lens (3) that in turn comprises:
∘ a first refractive surface (4) through which the light beam (2) is refracted; and
∘ a second refractive surface (5) through which the light beam (2) refracts;
wherein the first refractive surface (4) is arranged between the at least one light source (1) and the second refractive surface (5); and
• a shielding device (6) defining therein an interior space; wherein the first refractive surface (4) and the second refractive surface (5) are essentially parabolic;
wherein the first refractive surface (4) and the second refractive surface (5) are arranged such that the vertices of said parabolic surfaces are the furthermost points between each of them and the at least one light source (1) in the essentially vertical downward direction (+Y); and
wherein the second refractive surface (5) is confined in the interior space defined by the shielding device (6);
**characterised in that** the vertex of the first refractive surface (4) is arranged at the same height as an upper end of the second refractive surface (5) in the essentially vertical downward direction (+Y).

2. The optical device according to claim 1, **characterised in that** the lens (3) further comprises a first total internal reflection surface (7) that surrounds the at least one light source (1) up to the first refractive surface (4).

3. The optical device according to claim 2, **characterised in that** the first total internal reflection surface (7) is cylindrical.

4. The optical device according to claim 3, **characterised in that** the first total internal reflection surface (7) comprises a diameter that coincides with a diameter of the first refractive surface (4), this diameter of the first refractive surface (4) being the largest diameter of said essentially parabolic first refractive surface (4).

5. The optical device according to any of claims 2 to 4, **characterised in that** the lens (3) further comprises a second total internal reflection surface (8, 9) that surrounds the at least one light source (1) and the first total internal reflection surface (7) up to the second refractive surface (5).

6. The optical device according to claim 5, **characterised in that** the second total internal reflection surface (8, 9) is cylindrical, with a cylindrical section (8) and a flat section (9) connecting the cylindrical section (8) and the second refractive surface (5).

7. The optical device according to claim 6, **characterised in that** the cylindrical section (8) of the second total internal reflection surface (8, 9) comprises a diameter that is larger than a diameter of the second refractive surface (5), this diameter of the second refractive surface (5) being the largest diameter of said essentially parabolic second refractive surface (5).

8. The optical device according to any of the preceding claims, **characterised in that** the projection of the first refractive surface (4) in the essentially vertical downward direction (+Y) is contained in the second refractive surface (5).

9. The optical device according to any of the preceding claims, **characterised in that** it comprises one light source (1).

10. The optical device according to any of the preceding claims, **characterised in that** it comprises two adjacently arranged light sources (1).

11. The optical device according to any of the preceding claims, **characterised in that** the shielding device (6) has a truncated pyramid shape.

12. A luminaire comprising at least one optical device according to any of the preceding claims.

13. The luminaire according to claim 12, **characterised in that** it further comprises a housing (10) wherein the at least one optical device and holding means (11) for holding said luminaire are arranged.

14. The luminaire according to claim 13, **characterised in that** the holding means (11) comprise cables configured to support the luminaire on a ceiling.

15. The luminaire according to claim 14, **characterised in that** it comprises a plurality of adjacently arranged optical devices, preferably 54, held by 4 cables.

16. The luminaire according to any of claims 12 to 15, **characterised in that** it comprises a first set of optical devices comprising a light source (1) and a second set of optical devices comprising two adjacently arranged light sources (1), wherein the first set of optical devices and the second set of optical devices are arranged alternating in the luminaire.

## Patentansprüche

1. Optische Vorrichtung, umfassend:
• mindestens eine Lichtquelle (1), die dazu bestimmt ist, ein Lichtbündel (2) in einer im Wesentlichen vertikalen Abwärtsrichtung (+Y) auszustrahlen;
• eine Linse (3), die wiederum Folgendes umfasst:
o eine erste lichtbrechende Fläche (4), durch die das Lichtbündel (2) gebrochen wird; und
∘ eine zweite lichtbrechende Fläche (5), durch die das Lichtbündel (2) sich bricht;
wobei die erste lichtbrechende Fläche (4) zwischen der mindestens einen Lichtquelle (1) und der zweiten lichtbrechenden Fläche (5) angeordnet ist; und
• eine Abschirmvorrichtung (6), die darin einen Innenraum definiert;
wobei die erste lichtbrechende Fläche (4) und die zweite lichtbrechende Fläche (5) im Wesentlichen parabolisch sind;
wobei die erste lichtbrechende Fläche (4) und die zweite lichtbrechende Fläche (5) so angeordnet sind, dass die Scheitelpunkte der parabolischen Flächen die am weitesten entfernten Punkte zwischen den jeweiligen Flächen und der mindestens einen Lichtquelle (1) in der im Wesentlichen vertikalen Abwärtsrichtung (+Y) sind; und
wobei die zweite lichtbrechende Fläche (5) in dem durch die Abschirmvorrichtung (6) definierten Innenraum eingeschlossen ist;
**dadurch gekennzeichnet, dass** der Scheitelpunkt der ersten lichtbrechenden Fläche (4) auf der gleichen Höhe wie ein oberes Ende der zweiten lichtbrechenden Fläche (5) in der im Wesentlichen vertikalen Abwärtsrichtung (+Y) angeordnet ist.

2. Optische Vorrichtung nach Anspruch 1, **dadurch gekennzeichnet, dass** die Linse (3) ferner eine erste Fläche mit interner Totalreflexion (7) umfasst, die die mindestens eine Lichtquelle (1) bis zu der ersten lichtbrechenden Fläche (4) umgibt.

3. Optische Vorrichtung nach Anspruch 2, **dadurch gekennzeichnet, dass** die erste Fläche mit interner Totalreflexion (7) zylindrisch ist.

4. Optische Vorrichtung nach Anspruch 3, **dadurch gekennzeichnet, dass** die erste Fläche mit interner Totalreflexion (7) einen Durchmesser umfasst, der mit einem Durchmesser der ersten lichtbrechenden Fläche (4) übereinstimmt, wobei dieser Durchmesser der ersten lichtbrechenden Fläche (4) der größte Durchmesser der ersten im Wesentlichen parabolischen lichtbrechenden Fläche (4) ist.

5. Optische Vorrichtung nach einem der Ansprüche 2 bis 4, **dadurch gekennzeichnet, dass** die Linse (3) ferner eine zweite Fläche mit interner Totalreflexion (8, 9) umfasst, die die mindestens eine Lichtquelle (1) und die erste Fläche mit interner Totalreflexion (7) bis zu der zweiten lichtbrechenden Fläche (5) umgibt.

6. Optische Vorrichtung nach Anspruch 5, **dadurch gekennzeichnet, dass** die zweite Fläche mit interner Totalreflexion (8, 9) zylindrisch ist, mit einem zylindrischen Abschnitt (8) und einem flachen Abschnitt (9), der den zylindrischen Abschnitt (8) und die zweite lichtbrechende Fläche (5) verbindet.

7. Optische Vorrichtung nach Anspruch 6, **dadurch gekennzeichnet, dass** der zylindrische Abschnitt (8) der zweiten Fläche mit interner Totalreflexion (8, 9) einen Durchmesser umfasst, der größer ist als ein Durchmesser der zweiten lichtbrechenden Fläche (5), wobei dieser Durchmesser der zweiten lichtbrechenden Fläche (5) der größte Durchmesser der zweiten im Wesentlichen parabolischen lichtbrechenden Fläche (5) ist.

8. Optische Vorrichtung nach einem der vorhergehenden Ansprüche, **dadurch gekennzeichnet, dass** die Projektion der ersten lichtbrechenden Fläche (4) in der im Wesentlichen vertikalen Abwärtsrichtung (+Y) in der zweiten lichtbrechenden Fläche (5) enthalten ist.

9. Optische Vorrichtung nach einem der vorhergehenden Ansprüche, **dadurch gekennzeichnet, dass** sie eine Lichtquelle (1) umfasst.

10. Optische Vorrichtung nach einem der vorhergehenden Ansprüche, **dadurch gekennzeichnet, dass** sie zwei nebeneinander angeordnete Lichtquellen (1) umfasst.

11. Optische Vorrichtung nach einem der vorhergehenden Ansprüche, **dadurch gekennzeichnet, dass** die Abschirmvorrichtung (6) pyramidenstumpfförmig ist.

12. Leuchte, die mindestens eine optische Vorrichtung nach einem der vorhergehenden Ansprüche umfasst.

13. Leuchte nach Anspruch 12, **dadurch gekennzeichnet, dass** sie ferner ein Gehäuse (10) umfasst, wobei die mindestens eine optische Vorrichtung und Haltemittel (11) zum Halten der Leuchte angeordnet sind.

14. Leuchte nach Anspruch 13, **dadurch gekennzeichnet, dass** die Haltemittel (11) Kabel umfassen, die konfiguriert sind, um die Leuchte an einer Decke zu halten.

15. Leuchte nach Anspruch 14, **dadurch gekennzeichnet, dass** sie eine Vielzahl von nebeneinander angeordneten optischen Vorrichtungen, vorzugsweise 54, umfasst, die durch 4 Kabeln gehalten werden.

16. Leuchte nach einem der Ansprüche 12 bis 15, **dadurch gekennzeichnet, dass** sie einen ersten Satz von optischen Vorrichtungen, der eine Lichtquelle (1) umfasst, und einen zweiten Satz von optischen Vorrichtungen, der zwei nebeneinander angeordnete Lichtquellen (1) umfasst, umfasst, wobei der erste Satz von optischen Vorrichtungen und der zweite Satz von optischen Vorrichtungen abwechselnd in der Leuchte angeordnet sind.

## Revendications

1. Dispositif optique comprenant :
• au moins une source lumineuse (1) destinée à émettre un faisceau lumineux (2) dans une direction essentiellement verticale vers le bas (+Y) ;
• une lentille (3) qui comprend à son tour :
∘ une première surface réfractive (4) à travers laquelle le faisceau lumineux (2) se réfracte ; et
∘ une seconde surface réfractive (5) à travers laquelle le faisceau lumineux (2) se réfracte ;
dans lequel la première surface réfractive (4) est disposée entre l'au moins une source lumineuse (1) et la seconde surface réfractive (5) ; et
• un dispositif de blindage (6) définissant à l'intérieur de celui-ci un espace intérieur ;
dans lequel la première surface réfractive (4) et la seconde surface réfractive (5) sont essentiellement paraboliques ;
dans lequel la première surface réfractive (4) et la seconde surface réfractive (5) sont disposées de telle sorte que les sommets desdites surfaces paraboliques sont les points les plus éloignés entre chacune d'elles et l'au moins une source lumineuse (1) dans la direction essentiellement verticale vers le bas (+Y) ; et
dans lequel la seconde surface réfractive (5) est confinée dans l'espace intérieur défini par le dispositif de blindage (6) ;
**caractérisé en ce que** le sommet de la première surface réfractive (4) est disposé à la même hauteur qu'une extrémité supérieure de la seconde surface réfractive (5) dans la direction essentiellement verticale vers le bas (+Y).

2. Dispositif optique selon la revendication 1, **caractérisé en ce que** la lentille (3) comprend en outre une première surface de réflexion interne totale (7) qui entoure l'au moins une source lumineuse (1) jusqu'à la première surface réfractive (4).

3. Dispositif optique selon la revendication 2, **caractérisé en ce que** la première surface de réflexion interne totale (7) est cylindrique.

4. Dispositif optique selon la revendication 3, **caractérisé en ce que** la première surface de réflexion interne totale (7) comprend un diamètre qui coïncide avec un diamètre de la première surface réfractive (4), ce diamètre de la première surface réfractive (4) étant le plus grand diamètre de ladite première surface réfractive (4) essentiellement parabolique.

5. Dispositif optique selon l'une quelconque des revendications 2 à 4, **caractérisé en ce que** la lentille (3) comprend en outre une seconde surface de réflexion interne totale (8, 9) qui entoure l'au moins une source lumineuse (1) et la première surface de réflexion interne totale (7) jusqu'à la seconde surface réfractive (5).

6. Dispositif optique selon la revendication 5, **caractérisé en ce que** la seconde surface de réflexion interne totale (8, 9) est cylindrique, avec une section cylindrique (8) et une section plate (9) reliant la section cylindrique (8) et la seconde surface réfractive (5).

7. Dispositif optique selon la revendication 6, **caractérisé en ce que** la section cylindrique (8) de la seconde surface de réflexion interne totale (8, 9) comprend un diamètre qui est plus grand qu'un diamètre de la seconde surface réfractive (5), ce diamètre de la seconde surface réfractive (5) étant le plus grand diamètre de ladite seconde surface réfractive (5) essentiellement parabolique.

8. Dispositif optique selon l'une quelconque des revendications précédentes, **caractérisé en ce que** la projection de la première surface réfractive (4) dans la direction essentiellement verticale vers le bas (+Y) est contenue dans la seconde surface réfractive (5).

9. Dispositif optique selon l'une quelconque des revendications précédentes, **caractérisé en ce qu'**il comprend une source lumineuse (1).

10. Dispositif optique selon l'une quelconque des revendications précédentes, **caractérisé en ce qu'**il comprend deux sources lumineuses (1) disposées de manière adjacente.

11. Dispositif optique selon l'une quelconque des revendications précédentes, **caractérisé en ce que** le dispositif de blindage (6) a une forme de pyramide tronquée.

12. Luminaire comprenant au moins un dispositif optique selon l'une quelconque des revendications précédentes.

13. Luminaire selon la revendication 12, **caractérisé en ce qu'**il comprend en outre un boîtier (10) dans lequel sont disposés l'au moins un dispositif optique et des moyens de maintien (11) pour maintenir ledit luminaire.

14. Luminaire selon la revendication 13, **caractérisé en ce que** les moyens de maintien (11) comprennent des câbles configurés pour supporter le luminaire au plafond.

15. Luminaire selon la revendication 14, **caractérisé en ce qu'**il comprend une pluralité de dispositifs optiques disposés de manière adjacente, de préférence 54, maintenus par 4 câbles.

16. Luminaire selon l'une quelconque des revendications 12 à 15, **caractérisé en ce qu'**il comprend un premier ensemble de dispositifs optiques comprenant une source lumineuse (1) et un second ensemble de dispositifs optiques comprenant deux sources lumineuses (1) disposées de façon adjacente, dans lequel le premier ensemble de dispositifs optiques et le second ensemble de dispositifs optiques sont disposés en alternance dans le luminaire.
